# EUROPEAN PATENT APPLICATION

(11) **EP 3 318 135 A1**
(43) Date of publication of application: **09.05.2018**
(21) Application number: 16197071.0
(22) Date of filing: 03.11.2016
(51) Int. Cl.: A23G 3/52, A23G 3/56

(54) **EFFERVESCENT CANDY MATERIAL, A PROCESS FOR ITS PREPARATION AND PRODUCTS MADE THEREFROM**

(71) Applicant: Perfetti Van Melle S.p.A., 20020 Lainate (Milano) (IT)
(72) Inventor: RENEDO, Ernest, 20020 Lainate (Milano) (IT); HERNANDEZ, Jordi, 20020 Lainate (Milano) (IT); BOTTINI, Alessandro, 20020 Lainate (Milano) (IT)
(74) Representative: Bianchetti Bracco Minoja S.r.l.

(57) **Abstract**

The invention discloses an effervescent candy material characterized by specific particle size of the alkali metal bicarbonate compound, by food acid partially in particulate form and by selected moisture content. The invention also discloses candies or lollipops entirely or partially made of the effervescent material as well as processes for the preparation of said material.

## Description

The present invention concerns effervescent candy materials, products made therefrom and processes for their preparation.

### Background of the invention

Effervescent confectionery products are well known and commercially available.

Tablets or candies with effervescent effect can be obtained by incorporating sodium bicarbonate and citric acid (US4127645) in candy material. Sodium bicarbonate and citric acid can be incorporated into separate candy masses by applying the pulling technique (EP0437927). Controlling and keeping sodium bicarbonate particle size less than 100 micron is known in tablets and powders for pharmaceutical applications (WO2005001117).

EP2528450 discloses a process for the preparation of effervescent candies by loading CO2 into the candy material. This process does not allow the preparation of composite confectionery products with non-effervescent and effervescent regions.

None of the above mentioned methods solves the problem of poor quality during shelf life of candies. In particular, it has been found that accelerated shelf life tests conducted on commercial products reveal the formation of brown spots or brown shades on the surface of the candies.

The applicant has now found a material suited for the manufacture of effervescent candies and lollipops, either consisting of a single region or multiple regions, which does not show the mentioned problems.

### Description of the invention

The Applicant has found that candies that do not show brown spots or shades and yet displaying a nice effervescent effect can be made by a candy material comprising more than 50% by weight over the finished candy material reducing sugars, an alkali metal bicarbonate particulate component, from 0.1 to 10% by weight over the finished candy material of a food acid in particulate form and from 0.1% to 10% by weight over the finished candy material of a food acid in non-particulate form and residual moisture. The material of the invention can form one entire candy or lollipop piece or one defined region of a composite candy or lollipop piece.

The candy material is preferably a hard candy material containing reducing sugar in amorphous state. Residual moisture is less than 5%, preferably less than 3% by weight of the finished candy material. The applicant has found that more than 5% relative humidity leads to accelerated reaction between the bicarbonate and the acid, spoiling the effervescent effect and the shelf life of the product.

In a preferred embodiment of the invention, the mouthfeel, esthetic appearance and shelf life of the candy material are better if the candy material contains air bubbles and if, at the same time its density is lower than 1.3 g/ml, compared to density of 1.40 - 1.45 g/ml which is standard for a hard candy material. Preferably the density of the candy material of the invention is higher than 0.7 g/ml and lower than 1.25 g/ml and still more preferably between 1.0 g/ml and 1.2 g/ml

It is preferred that the candy material is opaque and it does not contain any mineral opacifier and preferably does not contain any of the following compounds: titanium dioxide, talc, calcium carbonate, calcium phosphate.

The candy material of the invention can form an entire candy or lollipop piece or one defined region of a composite candy or lollipop. The term composite candy refers to a confectionery article composed by at least one first material chosen from known confectionery materials and the candy material of the invention. The insertion of a stick makes the candy a lollipop. In a composite candy or lollipop, the different candy materials can be identified by different colors, flavors or mouthfeels. The composite candy material of the invention can be of any shape, in particular a candy material can be a non-effervescent confectionery material, preferably a hard candy non effervescent material.

The candy material of the invention contains an alkali metal bicarbonate particulate compound. The term "particulate compound" means a material made by engineered particles, that can be composed by one single chemical species or more than one species. The term "alkali metal bicarbonate particulate compound" means that the alkali metal bicarbonate is more than 95% of the compound.

Suitable alkali metal bicarbonate particulate compounds are sodium bicarbonate, potassium bicarbonate or mixtures thereof.

Alternatively, the alkali metal bicarbonate particulate compound consists of not less than 96% of sodium bicarbonate and from 0.1% to 4% of tricalcium phosphate.

In order to determine particle size various sieving methods can be applied. Air-jet sieving is preferred, even though other methods, such as throw-action sieving or horizontal sieving, can be used. Granulometry can then be expressed by different parameters like the median particle size and the % of particles retained on certain sieves.

Preferably, the alkali metal bicarbonate particulate has median particle size lower than 100 microns, preferably lower than 50 microns. More preferably, said alkali metal bicarbonate particulate compound is composed by crystals, particles, aggregates or conglomerates and mixtures thereof which passes through a 400 micron screen, preferably a 250 micron screen, more preferably through a 100 micron screen.

The applicant has in fact found that bigger particles or aggregates generate brown spots or areas. Bigger particle size are associated to a gritty mouthfeel of the candies containing them, while the mouthfeel of the invention is smooth and the particles cannot be perceived on the tongue of consumers or can be perceived as less gritty or disturbing compared to prior art candies, delivering a more pleasant palatability.

The food acid is selected from citric acid, malic acid, tartaric acid, fumaric acid and mixtures thereof. Said acids can be further encapsulated or passivated, i.e. their surface can be made less reactive toward bases like alkali metal bicarbonate, adding a chemical buffer. The shelf life of the candy material of the invention is enhanced if the percentage of said food acid in particulate form is from 1% to 15%, preferably from 3% to 12%, in excess with respect to the quantity which is needed to neutralize said alkali metal bicarbonate particulate compound.

The invention concerns also a process for the production of candies comprising the steps of:
a) Providing a mass of cooked candy material containing reducing sugars;
b) Transferring said mass onto a kneading table;
c) Providing an alkali metal bicarbonate particulate compound with median particle size lower than 100 microns and maximum 4% of the particles retained on a 200 mm sieve;
d) Sieving the material of step c) through a 400 micron sieve and collecting the material that passes through the sieve;
e) Adding the material of step d) and a food acid particulate to the mass of step b) and kneading for minimum 1 minute;
f) Working the mass in order to obtain single candy pieces, composite candy pieces, single lollipop pieces or composite lollipop pieces with effervescent effect upon consumption.

The sieve of step d is preferably a 250 micron sieve or a 100 micron sieve.

In fact, the applicant found that the combination of choosing the correct dimensions of the alkali metal bicarbonate particulate compound and further sieving said particulate, eliminates the brown spots or brown shadows in the finished candy or lollipop. At the same time the final effervescent effect is maintained.

Without being bound by theory, it is believed that bigger particles (deriving from manufacture of the alkali metal bicarbonate particulate compound) or aggregates (formed during storing) create a basic environment in the candy around the particles or aggregates, which in turn fosters a browning reaction.

It is preferred that the time between the step d) and e) is less than 8h, preferably less than 4h, still more preferably less than 2h. In one embodiment, step d) is done immediately prior to step e). In another embodiment, step d) is done during step e).

In order to achieve a good and uniform dispersion of the bicarbonate particulate compound and of the food acid particulate and to achieve an opaque finish, the candy material a step g) can be inserted, where the candy material is pulled after the kneading step from 10 to 120 seconds, preferably from 20 to 60 seconds.

The previous steps deliver a plastic and candy material, which is effervescent upon consumption, which can be worked in a multitude of shapes, e g. by molding, or that can be combined with other non-effervescent confectionery materials to give a composite candy, in contrast to alternative methods, as disclosed for example in EP2528450.

Thus, in a preferred embodiment of the invention, after steps e) or g) and prior to step f) the following steps are provided:
h) Providing a mass of confectionery material without any bicarbonate compound;
i) Combining the mass of steps e) or g) with the mass or masses of step h) in a permanent way through mechanical compression to obtain a composite mass wherein the different masses of steps e) or g) and h) identify corresponding and defined regions.

Preferably, the masses of the steps e) or g) and h) are singly worked into ropes that are united in a crosswheel in step i) to form a combined candy rope. This combined rope can undergo the following additional steps:
j) Size reduction through a rope sizer;
k) Die forming in a die set;
1) Optional insertion of sticks;
m) Cooling
in order to achieve a candy or a lollipop (when step 1 is carried out) with an effervescent region and a non-effervescent region.

The following example reports the percentage composition of an effervescent candy material.

### Example

| **Ingredients** | **%** |
|---|---|
| Sugar | 60 |
| Glucose syrup | 32 |
| Citric acid in particulate form | 1.8 |
| sodium bicarbonate particulate compound | 1.6 |
| Flavor | 0.1 |
| Citric acid in non-particulate form | 2 |
| Residual moisture | 2.5 |
| **Total** | **100.00** |

## Claims

1. Effervescent candy material comprising more than 50% by weight of reducing sugars, an alkali metal bicarbonate compound and a food acid component, **characterized in that**:
- the alkali metal bicarbonate compound contains at least 95% of alkali metal bicarbonate over the alkali metal bicarbonate compound and has median particle size lower than 100 microns, preferably lower than 50 microns;
- the food acid component comprises from 0.1 to 10% by weight over the finished candy material of food acid in particulate form and from 0.1% to 10% by weight of food acid over the finished candy material in non-particulate form;
- the residual moisture is less than 5%, preferably less than 3% by weight of the finished candy material.

2. The candy material of claim 1 wherein the alkali metal bicarbonate particulate compound contains more than 96% of sodium bicarbonate and from 0.1 % to 4% of tricalcium phosphate.

3. The candy material of claim 1 or 2 wherein the food acid is selected from citric acid, malic acid, tartaric acid, fumaric acid and mixtures thereof.

4. The candy material of claim 1, 2 or 3 wherein the food acid in particulate form is encapsulated or passivated.

5. The candy material of any one of claims 1-4 which is **characterized by** density lower than 1.3 g/ml.

6. A candy or lollipop comprising the material of claims 1-5.

7. A candy or lollipop of claim 6 consisting of a single region of the material of claims 1-5.

8. A candy or lollipop of claim 6 consisting of more regions, at least one of which consists of the material of claims 1-5.

9. Process for the production of candies of claims 6-8 comprising the steps of:
a) Providing a mass of cooked candy material containing reducing sugars;
b) Transferring said mass onto a kneading table;
c) Providing an alkali metal bicarbonate particulate compound with median particle size lower than 100 microns and maximum 4% of the particles retained on a 200 micron sieve;
d) Sieving the material of step c) through a 400 micron sieve and collecting the material that passes through the sieve;
e) Adding the material of step d) and a food acid particulate to the mass of step b) and kneading for minimum 1 minute;
f) Working the mass in order to obtain single candy pieces, composite candy pieces, single lollipop pieces or composite lollipop pieces with effervescent effect upon consumption.

10. The process of claim 9 wherein the time between the step d) and e) is less than 8h, preferably less than 4h, still more preferably less than 2h.

11. The process of claims 9 or 10 wherein after step e) the additional step g) pulling the kneaded mass for from 10 to 120 seconds is carried out.

12. The process of claims 9-11 wherein after steps e) or g) and prior to step f) the following steps are carried out:
h) Providing one or more masses of confectionery material without any bicarbonate compound;
i) Combining the mass of steps e) or g) with the mass or masses of step h) in a permanent way through mechanical compression to obtain a composite mass wherein the different masses of steps e) or g) and h) identify corresponding and defined regions.
